# EUROPEAN PATENT SPECIFICATION

(11) **EP 3 320 253 B1**
(45) Date of publication and mention of the grant of the patent: **22.05.2019**
(21) Application number: 16736061.9
(22) Date of filing: 05.07.2016
(51) Int. Cl.: F16M 11/08, F16M 11/20, H04B 1/38, H04M 1/04, A47F 7/024, E05B 73/00, F16M 11/10, H04B 1/3877

(54) **ROTATABLE LINK**
DREHBARE VERBINDUNG
LIEN ROTATIF

(30) Priority: 08.07.2015 DK 201500396
(43) Date of publication of application: 16.05.2018
(73) Proprietor: Ergonomic Solutions International Limited, Epsom Surrey KT19 9QQ (GB)
(72) Inventor: BURMESTER, Benny, 9400 Nørresundby (DK)
(74) Representative: Tellefsen, Jens J.
(86) International application number: PCT/EP2016/065747
(87) International publication number: WO 2017/005706

(56) References cited:
- WO-A1-2016/095916
- FR-A1- 2 812 931
- US-A- 3 584 822
- US-A1- 2005 041 048

## Description

### Technical field of the invention

The present invention relates to a rotatable link for use for a plate/mounting head on which a piece of hardware, such as a card terminal or tablet, may be secured.

### Background of the invention

It is an object of the present invention to provide a compact rotatable link, which may e.g. be incorporated in an upright, for use for a plate on which a piece of hardware, such as a card terminal or tablet, may be secured. Mobile electronic devices may have user displays that can be orientated in portrait or landscape positions. Mobile electronic devices may automatically change the orientation of the user screen based on how the mobile electronic device is being held. It is an object of the present invention to provide a compact rotatable link, which may be used to easily locate typical operating positions of the mobile electronic device when docked.

When the upright and/or a part of the rotatable link is angled, the plate on which a piece of hardware may be secured should also be moved by hand in a rotary movement, preferably in a sideways movement.

Document US 3584822 A1 which is considered to be the closest prior art, discloses a rotatable link comprising a body section, a base section, a rotation disc, a fastener, a channel, an elongated member and a stop pin.

### Summary of the invention

One aspect relates to a rotatable link comprising a body section, a base section, a rotation disc, and a first fastener;
wherein the base section comprises:
a) a base unit with a cable channel at least partly formed therein;
b) an elongated member with a first end attached to the base unit, and with a second end configured to be removably received by the first fastener; and
c) a rotation limiting channel configured for rotatably engaging with a stop pin of the rotation disc;
wherein the rotation disc comprises:
a) a channel configured for rotatably engaging with the elongated member of the base section;
b) a cable channel in communication with the cable channel of the base unit; and
c) a stop pin with a first end attached to the rotation disc.

Disclosed herein is a rotatable link. The rotatable link comprises a body section, a base section, a rotation disc, and a first fastener.

The base section comprises a base unit with a cable channel at least partly formed therein. The cable channel is formed such that cables provided for the hardware will not be pinched or kinked during the rotation of the link.

The base section also comprises an elongated member with a first end attached to the base unit, and with a second end configured to be removably received by the first fastener. The center axis of the elongated member provides the axis of rotation of the rotatable link. The elongated member may e.g. be a stud bolt.

The elongated member of the base section is positioned at the center of the base unit.

The elongated member is positioned on the base unit such that its center axis provides the axis of rotation of the rotatable link.

The cable channel at least partly formed in the base unit extends around the circumference of the elongated member.

In one or more embodiments, the cable channel at least partly formed in the base unit extends around the circumference of the elongated member in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

In one or more embodiments, the cable channel at least partly formed in the base unit extends around the circumference of the axis of rotation of the rotatable link in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

The base section further comprises a rotation limiting channel configured for rotatably engaging with a stop pin of the rotation disc. When the stop pin reaches an end of the rotation limiting channel, the rotation disc, and any device coupled thereto, will not be able to rotate further in that direction.

In one or more embodiments, the rotation limiting channel of the base section extends around the circumference of the channel configured for rotatably engaging with the elongated member of the base section.

In one or more embodiments, the rotation limiting channel extends around the elongated member of the base section in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

In one or more embodiments, the rotation limiting channel extends around the elongated member of the base section in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

The rotation disc comprises a channel configured for rotatably engaging with the elongated member of the base section.

The rotation disc also comprises a cable channel in communication with the cable channel of the base unit.

The rotation disc further comprises a stop pin with a first end attached to the base unit. The stop pin is present to avoid that the link can rotate more than at most 358 degrees around its center axis, preferably less, e.g. 100 degrees around its center axis. Else, the cables provided for the hardware will be pinched or kinked during the rotation of the link.

In one or more embodiments, a washer system is positioned between the base section and the rotation disc to reduce the friction between the two components. In one or more embodiments, the washer system comprises two soft metal or metal alloy (e.g. bronze) spring washers.

The inventors have prepared a special fastener suitable for rotation operations. In one or more embodiments, the first fastener comprises a spring washer system and a lock nut. In one or more embodiments, the first fastener comprises a curved washer, a hard metal (e.g. steel) spring washer, two soft metal or metal alloy (e.g. bronze) spring washers, a soft metal or metal alloy spring lock washer (e.g. bronze), and a lock nut.

In one or more embodiments, the rotatable link further comprises a mounting head on which a piece of hardware, such as a card terminal or tablet, may be secured.

In one or more embodiments, the mounting head comprises a channel configured for rotatably engaging with the elongated member of the base section.

In one or more embodiments, the mounting head comprises a cable channel in communication with the cable channel of the rotation disc.

In one or more embodiments, a part of the body section is configured as an angled tube. Thereby, a piece of hardware, such as a card terminal or tablet, secured either directly to the rotation disc or to a mounting head, will be mounted in an angle from the upright, in which the rotatable link is incorporated.

In one or more embodiments, the rotation disc, the mounting head, and/or the fastener is concentric with the elongated member of the base section.

It is also an object to provide a compact rotatable link that can enable sideways movement of an attached piece of hardware. Especially, when the upright and/or a part of the rotatable link is angled.

In one or more embodiments, the body section comprises a base part, a rotation ring, a body part, and a second fastener.

In one or more embodiments, the base part comprises:
a) a base unit with a cable channel at least partly formed therein;
b) an elongated member with a first end attached to the base unit, and with a second end configured to be removably received by the second fastener; and
c) a stop pin with a first end attached to the base unit.

The base part comprises a base unit with a cable channel at least partly formed therein. The cable channel is formed such that cables provided for the hardware will not be pinched or kinked during the rotation of the link.

The base part also comprises an elongated member with a first end attached to the base unit of the base part, and with a second end configured to be removably received by the second fastener. The center axis of the elongated member provides the axis of rotation of the rotatable link. The elongated member may e.g. be a stud bolt.

In one or more embodiments, the elongated member of the base part is positioned at the center of the base unit (of the base part).

In one or more embodiments, the elongated member is positioned on the base unit (of the base part) such that its center axis provides the axis of rotation of the rotatable link.

In one or more embodiments, the cable channel at least partly formed in the base unit (of the base part) extends around the circumference of the elongated member.

In one or more embodiments, the cable channel at least partly formed in the base unit of the base part extends around the circumference of the elongated member in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

In one or more embodiments, the cable channel at least partly formed in the base unit of the base part extends around the circumference of the axis of rotation of the rotatable link in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

The base part also comprises a stop pin with a first end attached to the base unit (of the base part). The stop pin is present to avoid that the link can rotate more than at most 358 degrees around its center axis, preferably less, e.g. 100 degrees around its center axis. Else, the cables provided for the hardware will be pinched or kinked during the rotation of the link.

In one or more embodiments, the body part comprises a bottom part configured for rotatably engaging with the rotation ring. It is crucial that a rotation ring is present, such that the rotatable link can rotate without making unwanted noise. Furthermore, the rotation ring stabilizes the body part and prevent tear of the same.

In one or more embodiments, the bottom part of the body part comprises:
a) a channel configured for rotatably engaging with the elongated member of the base unit;
b) a cable channel in communication with both the cable channel of the base part base unit and the cable channel of the base section base unit; and
c) a rotation limiting channel configured for rotatably engaging with the stop pin of the base unit.

The bottom part of the body part comprises a channel configured for rotatably engaging with the elongated member of the base unit.

The bottom part of the body part also comprises a cable channel in communication with both the cable channel of the base part base unit and the cable channel of the base section base unit.

The bottom part of the body part also comprises rotation limiting channel configured for rotatably engaging with the stop pin of the base unit. When the stop pin reaches an end of the rotation limiting channel, the body part will not be able to rotate further in that direction.

In one or more embodiments, a part of the body part is configured as an angled tube. Thereby, a piece of hardware, such as a card terminal or tablet, secured either directly to the rotation disc or to a mounting head, will be mounted in an angle from the upright, in which the rotatable link is incorporated.

In one or more embodiments, the rotation limiting channel extends around the circumference of the channel configured for rotatably engaging with the elongated member of the base unit.

In one or more embodiments, the rotation limiting channel extends around the circumference of the channel configured for rotatably engaging with the elongated member of the base unit in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

In one or more embodiments, the rotation limiting channel extends around the circumference of the axis of rotation of the rotatable link in an arc of 10-358 degrees, such as within the range of 20-355 degrees, e.g. within the range of 30-350 degrees, such as within the range of 35-345 degrees, e.g. within the range of 40-340 degrees, such as within the range of 45-335 degrees, e.g. within the range of 50-330 degrees, such as within the range of 55-325 degrees, e.g. within the range of 60-315 degrees, such as within the range of 65-305 degrees, e.g. within the range of 70-300 degrees, such as within the range of 75-295 degrees, e.g. within the range of 80-290 degrees, such as within the range of 85-285 degrees, e.g. within the range of 90-280 degrees, such as within the range of 95-275 degrees, e.g. within the range of 100-270 degrees, such as within the range of 105-265 degrees, e.g. within the range of 110-260 degrees, such as within the range of 115-255 degrees, e.g. within the range of 120-250 degrees, such as within the range of 125-245 degrees, e.g. within the range of 130-240 degrees, such as within the range of 135-235 degrees, e.g. within the range of 140-230 degrees, such as within the range of 145-225 degrees, e.g. within the range of 150-220 degrees, such as within the range of 155-215 degrees, e.g. within the range of 160-205 degrees, such as within the range of 165-200 degrees, e.g. within the range of 170-195 degrees, such as within the range of 175-190 degrees, e.g. within the range of 180-185 degrees.

In one or more embodiments, the rotation ring, the bottom part of the body part, the body part, the base unit and/or the second fastener is concentric with the elongated member.

The inventors have prepared a special fastener suitable for rotation operations. In one or more embodiments, the second fastener comprises a spring washer system and a lock nut. In one or more embodiments, the second fastener comprises a curved washer, a hard metal (e.g. steel) spring washer, two soft metal or metal alloy (e.g. bronze) spring washers, a soft metal or metal alloy spring lock washer (e.g. bronze), and a lock nut.

The washers comprise a channel configured for rotatably engaging with the elongated member of the base section and/or base part.

In one or more embodiments, the fastener comprises a washer system and a lock nut.

In one or more embodiments, the washer system comprises two washers of a soft metal or metal alloy, such as bronze, facing each other.

In one or more embodiments, the base unit of the base part is mounted in a tube, and wherein the tube is configured to support and accommodate at least a part of the rotation ring. In one or more embodiments, the tube is configured as an angled tube. The angled tube may be of any angle, preferably from 5-90 degrees.

In one or more embodiments, a part of the body section is configured as an angled tube. The angled tube may be of any angle, preferably from 5-90 degrees.

In one or more embodiments, the rotation ring and/or the curved washer comprises polyoxymethylene or similar polymers. Polyoxymethylene (POM), also known as acetal, polyacetal and polyformaldehyde is an engineering thermoplastic used in precision parts that require high stiffness, low friction and excellent dimensional stability. Like many other synthetic polymers, it is produced by different chemical firms with slightly different formulas and is therefore sold under many commercial names such as Delrin, Celcon, Hostaform, etc.

POM is characterized by its high strength, hardness and rigidity to about 40° C. POM has a density of ρ=1.410-1.420 g/cm³ and is intrinsically opaque white, due to its highly crystalline composition. POM is a tough material with a very low coefficient of friction, high abrasion resistance, high heat resistance and low water absorption. It is dimensionally stable under exposure to moisture and heat; resistant to chemicals, solvents, flexing and creep; and has a high gloss and low friction surface.

POM is commercially supplied in a granulated form and can be formed into the desired shape by applying heat and pressure. The two most common forming methods employed are injection molding and extrusion. Rotational molding and blow molding are also possible.

When supplied as extruded bar or sheet, POM may be machined using traditional methods such as turning, milling, drilling etc.

Other engineering plastics and thermoplastics may also be used to fabricate the rotation ring and/or the curved washer.

It is also an object of the invention to provide a compact rotatable link that can be tilted. In addition to being sufficiently slack to be affected by hand, it should also be suitably tight, so that a plate with a tablet mounted on the rotatable link maintains its position after forces have been exerted by hand.

In one or more embodiments, the body part comprises a tilt insert and a tilt part; wherein the tilt insert faces the bottom part of the body part;
wherein the tilt insert tiltably supports the tilt part, and the tilt part being tiltably mounted on the tilt insert;
wherein the tilt insert comprises a channel configured for rotatably engaging with the elongated member of the base part;
wherein the tilt part comprises a channel configured for rotatably and tiltably engaging with the elongated member of the base part.

In one or more embodiments, the body part comprises a tilt insert and a tilt part; wherein the tilt insert faces the bottom part of the body part; wherein the tilt insert comprises a channel configured for rotatably engaging with the elongated member of the base part;
wherein the tilt part comprises a channel configured for rotatably and tiltably engaging with the elongated member of the base part;
wherein the tilt insert has a first surface side and a second surface side;
wherein the first surface side is opposite to the second surface side;
wherein the first surface side is a curved convex surface tiltably supporting the tilt part;
wherein the tilt part has a first surface side and a second surface side;
wherein the first surface side is opposite to the second surface side;
wherein the second surface side is a curved concave surface configured for tiltably mounting and sliding on the first surface side of the tilt insert.

Hence, it is only the tilt part that is tiltable in relation to the elongated member.

In one or more embodiments, the channel of the bottom part configured for rotatably engaging with the elongated member of the base section extends into an (e.g. cylindrical) elongated member configured for engaging with the channel of the tilt insert configured for rotatably engaging with the elongated member of the base section. This allows for a compact system for engagement between the bottom part and the tilt insert.

In one or more embodiments, the tilt insert, the rotation ring, the bottom part of the body part, the body part, the base unit and/or the fastener is concentric with the elongated member.

In one or more embodiments, the body section further comprises a tilt insert and a tilt part; wherein the tilt insert faces the bottom part; wherein the tilt insert comprises a channel configured for rotatably engaging with the elongated member of the base section;
wherein the tilt part comprises a channel configured for rotatably and tiltably engaging with the elongated member of the base section;
wherein the tilt insert has a first surface side and a second surface side;
wherein the first surface side is opposite to the second surface side;
wherein the first surface side is a curved convex surface tiltably supporting the tilt part;
wherein the tilt part has a first surface side and a second surface side;
wherein the first surface side is opposite to the second surface side;
wherein the second surface side is a curved concave surface configured for tiltably mounting and sliding on the first surface side of the tilt insert.

In one or more embodiments, the bottom part has a first surface side and a second surface side; wherein the first surface side is opposite to the second surface side; wherein a part of the first surface side is configured for slideable supporting the curved concave surface of the tilt part.

The inventors have prepared a special fastener suitable for both rotation and tilting operations. In one or more embodiments, the fastener comprises a spring washer system and a lock nut. In one or more embodiments, the fastener comprises a curved washer, a hard metal (e.g. steel) spring washer, two soft metal or metal alloy (e.g. bronze) spring washers, a soft metal or metal alloy spring lock washer (e.g. bronze), and a lock nut.

In one or more embodiments, at least a the part of the first surface side of the tilt part comprising the channel configured for rotatably and tiltably engaging with the elongated member of the base section is a curved convex surface;
wherein the fastener comprises a curved washer configured for slideably engaging with the part of the first surface side of the tilt part comprising the channel configured for rotatably and tiltably engaging with the elongated member of the base section; and
wherein the curved washer comprises a channel configured for rotatably engaging with the elongated member of the base section.

In one or more embodiments, the curved washer is also configured for engaging with the channel configured for rotatably and tiltably engaging with the elongated member of the base section. By moving within and along the channel during a tilting operation, the channel aids in stabilizing the curved washer during such operation.

In one or more embodiments, the fastener comprises a washer system and a lock nut.

In one or more embodiments, the washer system comprises two washers of a soft metal or metal alloy, such as bronze, facing each other.

### Brief description of the figures

Figure 1 shows the general scheme of the invention in relation to the rotary movements in exploded view;
Figure 2 shows the body section in accordance with various embodiments of the invention in exploded view;
Figure 3 shows a bottom view of the body part in accordance with various embodiments of the invention;
Figure 4A shows an assembled version of a rotatable link with fixed tilt. Figure 4B shows a cross-section of Figure 4A;
Figure 4C shows an assembled version of a rotatable link with fixed tilt, and with the functionality of rotary movement along the plane of the plate secured to the link. Figure 4D shows a cross-section of an assembled version of the base section, the rotation disc, and the first fastener;
Figure 5 shows the base section, the rotation disc, and the first fastener in exploded view;
Figure 6 shows a rotatable link further comprising a mounting head;
Figure 7 shows the general scheme of the invention in relation to the rotary movements, as well as up-and-down movement, in exploded view;
Figure 8A shows an assembled version of a rotatable link with tilt function. Figure 8B shows a cross-section of Figure 8A;
Figure 8D shows an assembled version of a rotatable link with tilt function, and with the functionality of rotary movement along the plane of the plate secured to the link; and

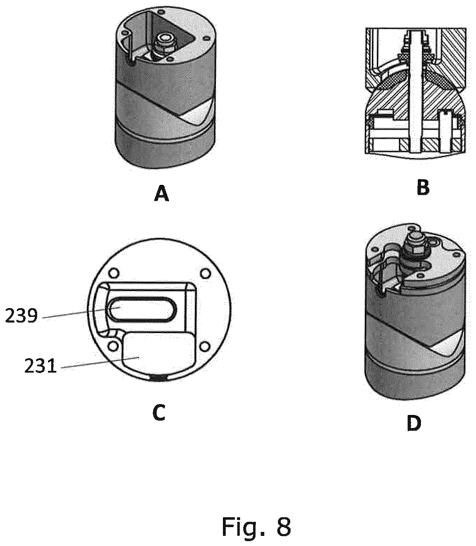

Figure 8C shows a tilt part comprising a channel configured for rotatably and tiltably engaging with the elongated member of the base part.

### Detailed description of the invention

It is an object of the present invention to provide a compact rotatable link, which may e.g. be incorporated in an upright, for use for a plate/mounting head on which a piece of hardware, such as a card terminal or tablet, may be secured. The plate should be moved by hand in a rotary movement along the plane of the plate (for portrait-landscape views on the tablet), but should preferably also be moved by hand in a sideways movement, as well as in an up-and-down movement for optimal positioning.

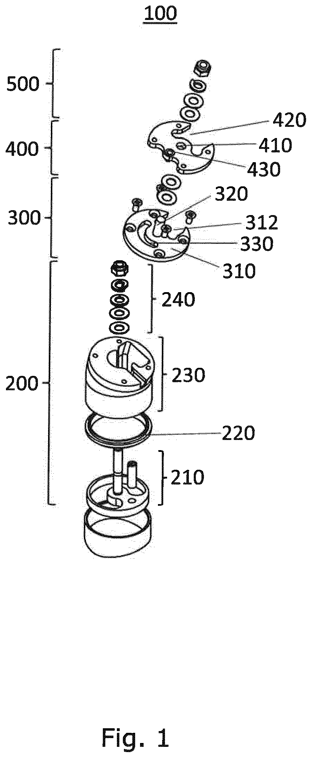

Referring to Figure 1, the general scheme of the invention is shown in relation to the rotary movements in exploded view. The up-and-down movement is here restricted to a fixed tilt of about 30 degrees.

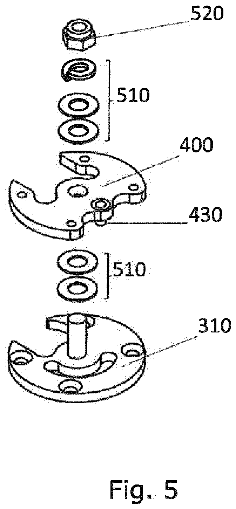

Figure 1 shows a rotatable link 100 comprising a body section 200, a base section 300, a rotation disc 400, and a first fastener 500. The base section 300 and the rotation disc 400, and the first fastener 500 allow for rotary movement along the plane of the plate secured to the link. A separate view of these elements is shown in Figure 5.

The base section 300 comprises a base unit 310 with a cable channel 312 at least partly formed therein.

The base section 300 also comprises an elongated member 320 with a first end attached to the base unit 310, and with a second end configured to be removably received by the first fastener 500.

The base section 300 further comprises a rotation limiting channel 330 configured for rotatably engaging with a stop pin 430 of the rotation disc 400.

The rotation disc 400 comprises a channel 410 configured for rotatably engaging with the elongated member 320 of the base section 300.

The rotation disc 400 also comprises a cable channel 420 in communication with the cable channel 312 of the base unit 310.

The rotation disc 400 further comprises a stop pin 430 with a first end attached to the rotation disc 400.

In Figure 1, the body section 200 is shown comprising a base part 210, a rotation ring 220, a body part 230, and a second fastener 240. This combination of elements allows for rotation of the link in a sideways movement.

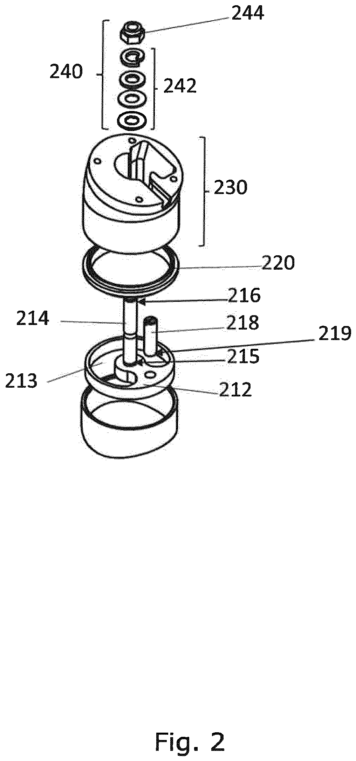

The base part 210 (Figure 2) comprises a base unit 212 with a cable channel 213 at least partly formed therein.

The base part 210 also comprises an elongated member 214 with a first end 215 attached to the base unit 212, and with a second end 216 configured to be removably received by the second fastener 240.

The base part 210 further comprises a stop pin 218 with a first end 219 attached to the base unit 212.

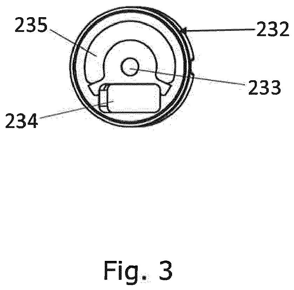

The body part 230 comprises a bottom part 232 (Figure 3) configured for rotatably engaging with the rotation ring 220.

The bottom part 232 (Figure 3) of the body part 230 comprises a channel 233 configured for rotatably engaging with the elongated member 214 of the base unit (212).

The bottom part 232 also comprises a cable channel 234 in communication with both the cable channel 213 of the base part base unit 212 and the cable channel 312 of the base section base unit 310.

The bottom part 232 further comprises a rotation limiting channel 235 configured for rotatably engaging with the stop pin 218 of the base unit 212.

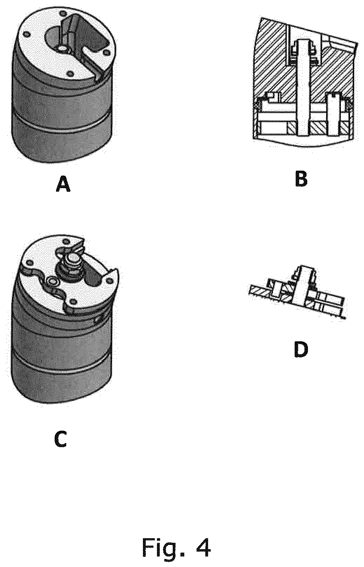

Figure 4A shows an assembled version of a rotatable link with fixed tilt. Figure 4B shows a cross-section of Figure 4A.

Figure 4C shows an assembled version of a rotatable link with fixed tilt, and with the functionality of rotary movement along the plane of the plate secured to the link. Figure 4D shows a cross-section of an assembled version of the base section 300, the rotation disc 400, and the first fastener 500.

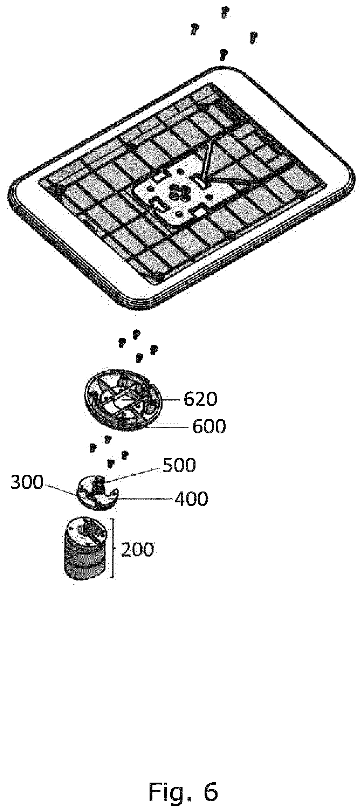

In Figure 6, a rotatable link is shown further comprising a mounting head 600. The mounting head 600 comprises a cable channel 620 in communication with the cable channel 420 of the rotation disc 400.

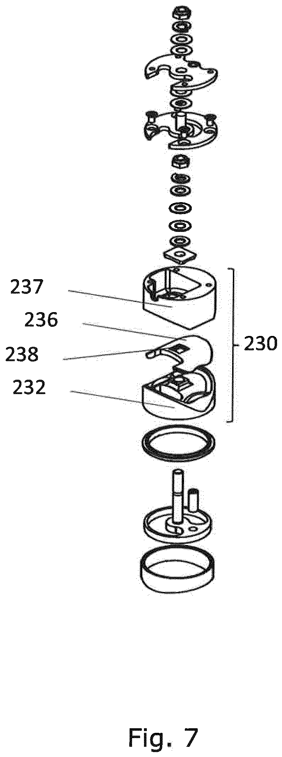

Referring to Figure 7, the general scheme of the invention is shown in relation to the rotary movements, as well as up-and-down movement, in exploded view.

Figure 7 shows a rotatable link, where the body part 230 comprises a tilt insert 236 and a tilt part 237, and where the tilt insert 236 faces the bottom part 232 of the body part 230.

The tilt insert 236 tiltably supports the tilt part 237, and the tilt part 237 is tiltably mounted on the tilt insert 236.

The tilt insert 236 also comprises a channel 238 configured for rotatably engaging with the elongated member 214 of the base part 210.

The tilt part 237 comprises a channel 239 configured for rotatably and tiltably engaging with the elongated member 214 of the base part 210 (Figure 8C). Thereby, the tilt part 237 is capable of tilting relative to the other components that are only able to rotate around the elongated member 214. The tilt part 237 also comprises a cable channel 231.

In Figure 5, a washer system 510 is positioned between the base section and the rotation disc to reduce the friction between the two components. The washer system comprises two soft metal or metal alloy (e.g. bronze) spring washers.

The inventors have prepared a special fastener suitable for both rotation and tilting operations. The second fastener 240 comprises a spring washer system 242 and a lock nut 244 (Figure 2). The second fastener 240 is shown (from bottom to top of the link) with a curved washer, a hard metal (e.g. steel) spring washer, two soft metal or metal alloy (e.g. bronze) spring washers, a soft metal or metal alloy spring lock washer (e.g. bronze), and a lock nut 244.

The curved washer is configured for slideably engaging with the part of the first surface side of the tilt part 237 comprising the channel 238 configured for rotatably and tiltably engaging with the elongated member 214 of the base part 212.

The curved washer comprises a channel configured for rotatably engaging with the elongated member 214 of the base part 212.

Figure 8A shows an assembled version of a rotatable link with tilt function. Figure 8B shows a cross-section of Figure 8A.
Figure 8D shows an assembled version of a rotatable link with tilt function, and with the functionality of rotary movement along the plane of the plate secured to the link.

### References

- 100: Rotatable link
- 200: Body section
- 210: Base part
- 212: Base unit
- 213: Cable channel
- 214: Elongated member
- 215: First end
- 216: Second end
- 218: Stop pin
- 219: First end
- 220: Rotation ring
- 230: Body part
- 231: Cable channel
- 232: Bottom part
- 233: Channel
- 234: Cable channel
- 235: Rotation limiting channel
- 236: Tilt insert
- 237: Tilt part
- 238: Channel
- 239: Channel
- 240: Second fastener
- 242: Spring washer system
- 244: Lock nut
- 300: Base section
- 310: Base unit
- 312: Cable channel
- 320: Elongated member
- 322: First end
- 324: Second end
- 330: Rotation limiting channel
- 400: Rotation disc
- 410: Channel
- 420: Cable channel
- 500: First fastener
- 510: Washer system
- 512: Channel
- 520: Washer system
- 521: Washer
- 520: Lock nut
- 600: Tube

## Claims

1. A rotatable link (100) comprising a body section (200), a base section (300), a rotation disc (400), and a first fastener (500);
wherein the base section (300) comprises:
a) a base unit (310) with a cable channel (312) at least partly formed therein;
b) an elongated member (320) with a first end (322) attached to the base unit (310), and with a second end (324) configured to be removably received by the first fastener (500); and
c) a rotation limiting channel (330) configured for rotatably engaging with a stop pin (430) of the rotation disc (400);
wherein the rotation disc (400) comprises:
a) a channel (410) configured for rotatably engaging with the elongated member (320) of the base section (300);
b) a cable channel (420) in communication with the cable channel (312) of the base unit (310); and
c) a stop pin (430) with a first end (432) attached to the rotation disc (400) - wherein the body section (200) comprises a base part (210), a rotation ring (220), a body part (230), and a second fastener (240);
wherein the base part (210) comprises:
a) a base unit (212) with a cable channel (213) at least partly formed therein;
b) an elongated member (214) with a first end (215) attached to the base unit (212), and with a second end (216) configured to be removably received by the second fastener (240); and
c) a stop pin (218) with a first end (219) attached to the base unit (212);
wherein the body part (230) comprises a bottom part (232) configured for rotatably engaging with the rotation ring (220);
wherein the bottom part (232) of the body part (230) comprises:
a) a channel (233) configured for rotatably engaging with the elongated member (214) of the base unit (212);
b) a cable channel (234) in communication with both the cable channel (213) of the base part base unit (212) and the cable channel (312) of the base section base unit (310); and
c) a rotation limiting channel (235) configured for rotatably engaging with the stop pin (218) of the base unit (212).

2. A rotatable link (100) according to claim 1, further comprising a mounting head (600), wherein the mounting head (600) comprises a channel configured for rotatably engaging with the elongated member (320) of the base section (300).

3. A rotatable link (100) according to any one of the claims 1-2, further comprising a mounting head (600), wherein the mounting head (600) comprises a cable channel (620) in communication with the cable channel (420) of the rotation disc (400).

4. A rotatable link (100) according to any one of the claims 1-3, wherein the first fastener (500) and/or the second fastener (240) comprises a spring washer system (510/242) and a lock nut (520/244).

5. A rotatable link (100) according to claim 1, wherein a part of the body section (200) is configured as an angled tube.

6. A rotatable link (100) according to any one of the claims 1-4, wherein a part of the body part (230) is configured as an angled tube.

7. A rotatable link (100) according to any one of the claims 1-6, wherein the elongated member (320) of the base section (300) is positioned at the center of the base unit (310).

8. A rotatable link (100) according to any one of the claims 1-7, wherein the body part (230) comprises a tilt insert (236) and a tilt part (237); wherein the tilt insert (236) faces the bottom part (232) of the body part (230);
wherein the tilt insert (236) tiltably supports the tilt part (237), and the tilt part (237) being tiltably mounted on the tilt insert (236);
wherein the tilt insert (236) comprises a channel (238) configured for rotatably engaging with the elongated member (214) of the base part (210); wherein the tilt part (237) comprises a channel (239) configured for rotatably and tiltably engaging with the elongated member (214) of the base part (210).

9. A rotatable link (100) according to any one of the claims 1-7, wherein the body part (230) comprises a tilt insert (236) and a tilt part (237); wherein the tilt insert (236) faces the bottom part (232) of the body part (230); wherein the tilt insert (236) comprises a channel (238) configured for rotatably engaging with the elongated member (214) of the base part (210);
wherein the tilt part (237) comprises a channel (239) configured for rotatably and tiltably engaging with the elongated member (214) of the base part (210);
wherein the tilt insert (236) has a first surface side and a second surface side; wherein the first surface side is opposite to the second surface side; wherein the first surface side is a curved convex surface tiltably supporting the tilt part (237);
wherein the tilt part (237) has a first surface side and a second surface side; wherein the first surface side is opposite to the second surface side; wherein the second surface side is a curved concave surface configured for tiltably mounting and sliding on the first surface side of the tilt insert (236).

## Patentansprüche

1. Drehbare Verbindung (100), umfassend einen Körperabschnitt (200), einen Basisabschnitt (300), eine Rotationsscheibe (400) und ein erstes Befestigungselement (500);
wobei der Basisabschnitt (300) umfasst:
a) eine Basiseinheit (310) mit einem zumindest teilweise darin ausgebildeten Kabelkanal (312);
b) ein längliches Element (320) mit einem ersten Ende (322), das an der Basiseinheit (310) befestigt ist, und mit einem zweiten Ende (324), das dazu konfiguriert ist, durch das erste Befestigungselement (500) abnehmbar aufgenommen zu werden; und
c) einen Rotationsbegrenzungskanal (330), der zum drehbaren Eingreifen mit einem Anschlagstift (430) der Rotationsscheibe (400) konfiguriert ist;
wobei die Rotationsscheibe (400) umfasst:
a) einen Kanal (410), der zum drehbaren Eingreifen mit dem länglichen Element (320) des Basisabschnitts (300) konfiguriert ist;
b) einen Kabelkanal (420) in Kommunikation mit dem Kabelkanal (312) der Basiseinheit (310); und
c) einen Anschlagstift (430) mit einem ersten Ende (432), das an der Rotationsscheibe (400) befestigt ist
- wobei der Körperabschnitt (200) ein Basisteil (210), einen Rotationsring (220), ein Körperteil (230) und ein zweites Befestigungselement (240) umfasst;
wobei das Basisteil (210) umfasst:
a) eine Basiseinheit (212) mit einem zumindest teilweise darin ausgebildeten Kabelkanal (213);
b) ein längliches Element (214) mit einem ersten Ende (215), das an der Basiseinheit (212) befestigt ist, und mit einem zweiten Ende (216), das dazu konfiguriert ist, durch das zweite Befestigungselement (240) abnehmbar aufgenommen zu werden; und
c) einen Anschlagstift (218) mit einem ersten Ende (219), das an der Basiseinheit (212) befestigt ist;
wobei das Körperteil (230) ein unteres Teil (232) umfasst, das zum drehbaren Eingreifen mit dem Rotationsring (220) konfiguriert ist;
wobei das untere Teil (232) des Körperteils (230) umfasst:
a) einen Kanal (233), der zum drehbaren Eingreifen mit dem länglichen Element (214) der Basiseinheit (212) konfiguriert ist;
b) einen Kabelkanal (234) in Kommunikation mit sowohl dem Kabelkanal (213) der Basisteil-Basiseinheit (212) als auch dem Kabelkanal (312) der Basisabschnitt-Basiseinheit (310); und
c) einen Rotationsbegrenzungskanal (235), der zum drehbaren Eingreifen mit dem Anschlagstift (218) der Basiseinheit (212) konfiguriert ist.

2. Drehbare Verbindung (100) nach Anspruch 1, ferner umfassend einen Montagekopf (600), wobei der Montagekopf (600) einen Kanal umfasst, der zum drehbaren Eingreifen mit dem länglichen Element (320) des Basisabschnitts (300) konfiguriert ist.

3. Drehbare Verbindung (100) nach einem der Ansprüche 1-2, ferner umfassend einen Montagekopf (600), wobei der Montagekopf (600) einen Kabelkanal (620) in Kommunikation mit dem Kabelkanal (420) der Rotationsscheibe (400) umfasst.

4. Drehbare Verbindung (100) nach einem der Ansprüche 1-3, wobei das erste Befestigungselement (500) und/oder das zweite Befestigungselement (240) ein Federscheibensystem (510/242) und eine Kontermutter (520/244) umfasst.

5. Drehbare Verbindung (100) nach Anspruch 1, wobei ein Teil des Körperabschnitts (200) als ein abgewinkeltes Rohr konfiguriert ist.

6. Drehbare Verbindung (100) nach einem der Ansprüche 1-4, wobei ein Teil des Körperteils (230) als ein abgewinkeltes Rohr konfiguriert ist.

7. Drehbare Verbindung (100) nach einem der Ansprüche 1-6, wobei das längliche Element (320) des Basisabschnitts (300) an der Mitte der Basiseinheit (310) positioniert ist.

8. Drehbare Verbindung (100) nach einem der Ansprüche 1-7, wobei das Körperteil (230) einen Kippeinsatz (236) und ein Kippteil (237) umfasst; wobei der Kippeinsatz (236) dem unteren Teil (232) des Körperteils (230) zugewandt ist;
wobei der Kippeinsatz (236) das Kippteil (237) kippbar lagert und das Kippteil (237) kippbar an dem Kippeinsatz (236) montiert ist;
wobei der Kippeinsatz (236) einen Kanal (238) umfasst, der zum drehbaren Eingreifen mit dem länglichen Element (214) des Basisteils (210) konfiguriert ist;
wobei das Kippteil (237) einen Kanal (239) umfasst, der zum drehbaren und kippbaren Eingreifen mit dem länglichen Element (214) des Basisteils (210) konfiguriert ist.

9. Drehbare Verbindung (100) nach einem der Ansprüche 1-7, wobei das Körperteil (230) einen Kippeinsatz (236) und ein Kippteil (237) umfasst; wobei der Kippeinsatz (236) dem unteren Teil (232) des Körperteils (230) zugewandt ist; wobei der Kippeinsatz (236) einen Kanal (238) umfasst, der zum drehbaren Eingreifen mit dem länglichen Element (214) des Basisteils (210) konfiguriert ist;
wobei das Kippteil (237) einen Kanal (239) umfasst, der zum drehbaren und kippbaren Eingreifen mit dem länglichen Element (214) des Basisteils (210) konfiguriert ist;
wobei der Kippeinsatz (236) eine erste Flächenseite und eine zweite Flächenseite aufweist; wobei die erste Flächenseite gegenüber der zweiten Flächenseite liegt; wobei die erste Flächenseite eine gekrümmte konvexe Fläche ist, die das Kippteil (237) kippbar lagert;
wobei das Kippteil (237) eine erste Flächenseite und eine zweite Flächenseite aufweist; wobei die erste Flächenseite gegenüber der zweiten Flächenseite liegt; wobei die zweite Flächenseite eine gekrümmte konkave Fläche ist, die zum kippbaren Montieren und Gleiten an der ersten Flächenseite des Kippeinsatzes (236) konfiguriert ist.

## Revendications

1. Lien rotatif (100) comprenant une section de corps (200), une section de base (300), un disque de rotation (400) et un premier élément de fixation (500) ;
dans lequel la section de base (300) comprend :
a) une unité de base (310) avec un canal de câble (312) au moins partiellement formé à l'intérieur de celle-ci ;
b) un élément allongé (320) avec une première extrémité (322) fixée à l'unité de base (310), et avec une seconde extrémité (324) conçue pour être reçue de façon amovible par le premier élément de fixation (500) ; et
c) un canal de limitation de rotation (330) conçu pour venir en prise de manière rotative avec une broche d'arrêt (430) du disque de rotation (400) ;
dans lequel le disque de rotation (400) comprend :
a) un canal (410) conçu pour venir en prise de manière rotative avec l'élément allongé (320) de la section de base (300) ;
b) un canal de câble (420) en communication avec le canal de câble (312) de l'unité de base (310) ; et
c) une broche d'arrêt (430) avec une première extrémité (432) fixée au disque de rotation (400)
- dans lequel la section de corps (200) comprend une partie de base (210), un anneau de rotation (220), une partie de corps (230), et un second élément de fixation (240) ;
dans lequel la partie de base (210) comprend :
a) une unité de base (212) avec un canal de câble (213) au moins partiellement formé à l'intérieur de celle-ci ;
b) un élément allongé (214) avec une première extrémité (215) fixée à l'unité de base (212), et avec une seconde extrémité (216) conçue pour être reçue de façon amovible par le second élément de fixation (240) ; et
c) une broche d'arrêt (218) avec une première extrémité (219) fixée à l'unité de base (212) ;
dans lequel la partie de corps (230) comprend une partie inférieure (232) conçue pour venir en prise de manière rotative avec l'anneau de rotation (220) ;
dans lequel la partie inférieure (232) de la partie de corps (230) comprend :
a) un canal (233) conçu pour venir en prise de manière rotative avec l'élément allongé (214) de l'unité de base (212) ;
b) un canal de câble (234) en communication à la fois avec le canal de câble (213) de l'unité de base de la partie de base (212) et le canal de câble (312) de l'unité de base de la section de base (310) ; et
c) un canal de limitation de rotation (235) conçu pour venir en prise de manière rotative avec la broche d'arrêt (218) de l'unité de base (212).

2. Lien rotatif (100) selon la revendication 1, comprenant en outre une tête de montage (600), dans lequel la tête de montage (600) comprend un canal conçu pour venir en prise de manière rotative avec l'élément allongé (320) de la section de base (300).

3. Lien rotatif (100) selon l'une quelconque des revendications 1 à 2, comprenant en outre une tête de montage (600), dans lequel la tête de montage (600) comprend un canal de câble (620) en communication avec le canal de câble (420) du disque de rotation (400).

4. Lien rotatif (100) selon l'une quelconque des revendications 1 à 3, dans lequel le premier élément de fixation (500) et/ou le second élément de fixation (240) comprend un système de rondelle élastique (510/242) et un écrou de blocage (520/244).

5. Lien rotatif (100) selon la revendication 1, dans lequel une partie de la section de corps (200) est conçue en tant que tube coudé.

6. Lien rotatif (100) selon l'une quelconque des revendications 1 à 4, dans lequel une partie de la section de corps (230) est conçue en tant que tube coudé.

7. Lien rotatif (100) selon l'une quelconque des revendications 1 à 6, dans lequel l'élément allongé (320) de la section de base (300) est positionnée au centre de l'unité de base (310).

8. Lien rotatif (100) selon l'une quelconque des revendications 1 à 7, dans lequel la partie de corps (230) comprend un insert d'inclinaison (236) et une partie d'inclinaison (237) ; dans lequel l'insert d'inclinaison (236) fait face à la partie inférieure (232) de la partie de corps (230) ;
dans lequel l'insert d'inclinaison (236) soutient de manière inclinable la partie d'inclinaison (237), et la partie d'inclinaison (237) est montée de manière inclinable sur l'insert d'inclinaison (236) ;
dans lequel l'insert d'inclinaison (236) comprend un canal (238) conçu pour venir en prise de manière rotative avec l'élément allongé (214) de la partie de base (210) ;
dans lequel la partie d'inclinaison (237) comprend un canal (239) conçu pour venir en prise de manière rotative et inclinable avec l'élément allongé (214) de la partie de base (210) .

9. Lien rotatif (100) selon l'une quelconque des revendications 1 à 7, dans lequel la partie de corps (230) comprend un insert d'inclinaison (236) et une partie d'inclinaison (237) ; dans lequel l'insert d'inclinaison (236) fait face à la partie inférieure (232) de la partie de corps (230) ; dans lequel l'insert d'inclinaison (236) comprend un canal (238) conçu pour venir en prise de manière rotative avec l'élément allongé (214) de la partie de base (210) ;
dans lequel la partie d'inclinaison (237) comprend un canal (239) conçu pour venir en prise de manière rotative et inclinable avec l'élément allongé (214) de la partie de base (210) ;
dans lequel l'insert d'inclinaison (236) a un premier côté de surface et un second côté de surface ; dans lequel le premier côté de surface est opposé au second côté de surface ; dans lequel le premier côté de surface est une surface convexe incurvée soutenant de manière inclinable la partie d'inclinaison (237) ;
dans lequel la partie d'inclinaison (237) a un premier côté de surface et un second côté de surface ; dans lequel le premier côté de surface est opposé au second côté de surface ; dans lequel le second côté de surface est une surface concave incurvée conçue pour être montée et coulisser de manière inclinable sur le premier côté de surface de l'insert d'inclinaison (236).
